(19) Europäisches Patentamt / European Patent Office / Office européen des brevets

(11) **EP 2 930 540 B1**

(12) **FASCICULE DE BREVET EUROPEEN**

(45) Date de publication et mention de la délivrance du brevet:
**27.05.2020 Bulletin 2020/22**

(51) Int Cl.:
*G01T 7/00* (2006.01)    *G06T 11/00* (2006.01)

(21) Numéro de dépôt: **15248025.7**

(22) Date de dépôt: **03.04.2015**

(54) **PROCÉDÉ DE LINÉARISATION DE MESURES D'ATTÉNUATION PRISES PAR UN CAPTEUR SPECTROMÉTRIQUE**

VERFAHREN ZUR LINEARISIERUNG DER ABSCHWÄCHUNGSMESSWERTE, DIE ÜBER EINEN SPEKTROMETRISCHEN MESSSENSOR AUFGENOMMEN WERDEN

METHOD FOR LINEARISATION OF ATTENUATION MEASUREMENTS TAKEN BY A SPECTROMETRIC SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.04.2014 FR 1453051**

(43) Date de publication de la demande:
**14.10.2015 Bulletin 2015/42**

(73) Titulaire: **Commissariat à l'Énergie Atomique et aux Énergies Alternatives 75015 Paris (FR)**

(72) Inventeurs:
• **POPA, Emil**
**06150 Cannes La Bocca (FR)**
• **REBUFFEL, Véronique**
**38700 Corenc (FR)**

(74) Mandataire: **Brevalex**
**56, Boulevard de l'Embouchure**
**B.P. 27519**
**31075 Toulouse Cedex 2 (FR)**

(56) Documents cités:
WO-A1-2013/011031    WO-A2-01/84500
US-A1- 2007 217 566    US-A1- 2009 161 933

• POTOP A ET AL: "Investigation of the polynomial approach for material decomposition in spectral X-ray tomography using an energy-resolved detector", PROGRESS IN BIOMEDICAL OPTICS AND IMAGING, SPIE - INTERNATIONAL SOCIETY FOR OPTICAL ENGINEERING, BELLINGHAM, WA, US, vol. 9033, 19 mars 2014 (2014-03-19), pages 90333I-90333I, XP060031589, ISSN: 1605-7422, DOI: 10.1117/12.2042133 ISBN: 978-0-8194-9850-2
• Jean Rinkel ET AL: "Quantitative Digital Radiography Image Processing" In: "Photon-Based Medical Imagery", 13 février 2013 (2013-02-13), John Wiley & Sons, Inc., Hoboken, NJ, USA, XP055150321, ISBN: 978-1-84-821241-1 pages 123-160, DOI: 10.1002/9781118601242.ch3, * le document en entier *
• J Kukal ET AL: "USING RADON TRANSFORM FOR DENOISING OF BIOMEDICAL IMAGE", , 31 décembre 2006 (2006-12-31), XP055150322, Extrait de l'Internet: URL:http://dsp.vscht.cz/gavlasoa/web-content/papers/06Mendel_radon_PAPER.pdf [extrait le 2014-10-31]
• Limor Martin: "ENHANCED INFORMATION EXTRACTION IN MULTI-ENERGY X-RAY TOMOGRAPHY FOR", , 30 March 2014 (2014-03-30), XP55462124, Retrieved from the Internet: URL:http://people.bu.edu/limor/Limor%20Martin%20Dissertation%20rev%201.pdf [retrieved on 2018-03-22]

EP 2 930 540 B1

**Description**

**DOMAINE TECHNIQUE**

La présente invention concerne le domaine de l'imagerie spectrométrique en transmission ainsi que celui de la tomographie (CT) par rayons X ou par rayons gamma.

**ÉTAT DE LA TECHNIQUE ANTÉRIEURE**

La spectrométrie à conversion directe utilise un détecteur à semi-conducteur (par exemple en CdTe), généralement discrétisé sous la forme d'une barrette ou d'une matrice de capteurs élémentaires, dans lequel les photons d'un rayonnement incident (X ou gamma) créent un nuage de charges électroniques (de l'ordre de 1000 électrons pour un photon X de 60 keV). Les charges ainsi générées sont collectées par des électrodes associées aux capteurs élémentaires et forment un signal électrique transitoire présentant la forme d'impulsions. L'intégrale d'une telle impulsion est généralement proportionnelle à l'énergie déposée par le photon incident. Un circuit électronique relié au capteur permet d'estimer cette intégrale par une mesure de l'amplitude de l'impulsion, ce qui permet l'estimation de l'énergie déposée par le photon incident. Après numérisation, les valeurs des énergies mesurées sont réparties en canaux d'énergie ou bandes d'énergie (*energy bins*) sous la forme d'un histogramme permettant de construire le spectre du rayonnement après interaction avec l'objet irradié. Ce spectre fournit notamment des informations sur la densité et la nature de l'objet.

Toutefois, le spectre fourni par un tel spectromètre est déformé par rapport au spectre réel du rayonnement incident en raison d'interactions physiques dispersives en énergie entre le rayonnement et le détecteur. Plus précisément, les phénomènes de partage de charge et de partage d'induction conduisent à une surestimation des photons basse énergie et une sous-estimation des photons haute énergie dans le spectre.

Ces phénomènes entraînent des artefacts de mesure dépendant de l'épaisseur de l'objet irradié. En effet, plus l'épaisseur traversée par le rayonnement est importante et plus son spectre est décalé vers les hautes énergies. On parle de « durcissement de spectre » (*spectrum hardening*). Cet effet est d'autant plus prononcé que les canaux d'énergie utilisés par le spectromètre sont larges.

Le durcissement de spectre conduit à des mesures d'atténuation erronées, ne dépendant pas linéairement de l'épaisseur traversée par le rayonnement.

De manière similaire, le durcissement de spectre génère des artefacts dans les images de tomodensitométrie (*computed tomography*), en particulier à des artefacts dits de « cupping » (*cupping artifacts*) et de « streaking » (*streaking artifacts*) dans des matériaux inhomogènes. Ces artefacts sont préjudiciables à l'interprétation et l'exploitation des images obtenues.

Le document "Investigation of the polynomial approach for material décomposition in spectral X-ray tomography using an energy-resolved detector" par A Potop concerne la décomposition du composant de base de l'information acquise au cours d'un tomodensitomètre à rayons X à l'aide d'un détecteur à conversion directe résolvant l'énergie.

La thèse de L. Martin intitulée « Enhanced information extraction in multi-energy X-ray tomography for security », soutenue en 2014, décrit une méthode de caractérisation de matériau à partir d'une image MECT (Multi Energy Computed Tomography) associant à chaque point de l'objet une étiquette correspondant à un matériau parmi une pluralité de matériaux d'intérêt.

L'objet de la présente invention est de corriger les mesures d'atténuation prises par un spectromètre à conversion directe de sorte que celles-ci dépendent linéairement de l'épaisseur du matériau traversé.

Un objet subsidiaire de la présente invention est de réduire les artefacts de cupping et de streaking en tomodensitométrie.

**EXPOSÉ DE L'INVENTION**

La présente invention est définie par une méthode de mesure d'atténuation subie par un rayonnement traversant un objet au moyen d'un spectromètre à conversion directe telle que définie dans la revendication 1. Des modes de réalisation avantageux de cette méthode de mesure d'atténuation sont donnés dans les revendications dépendantes.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

La Fig. 1 représente un schéma expérimental utilisant un spectromètre à conversion directe connu de l'état de la technique ;

La Fig. 2 représente des courbes de coefficients d'atténuation en fonction des canaux d'énergie ;

La Fig. 3 représente schématiquement un modèle de l'atténuation mesurée par un spectromètre à conversion directe ;

La Fig. 4 représente des exemples de courbes de déformation non linéaire utilisées dans le modèle de la Fig. 3 ;

La Fig. 5 représente un organigramme d'une méthode de linéarisation de mesures d'atténuation obtenues au moyen d'un spectromètre à conversion directe, selon un mode de réalisation de l'invention ;

La Fig. 6 représente le mode opératoire de la méthode de linéarisation de mesures d'atténuation de la Fig. 5 à partir du modèle de la Fig. 3 ;

La Fig. 7 représente un exemple de spectre d'une source de rayonnement ;

La Fig. 8 illustre l'effet de la méthode de linéarisation de mesures d'atténuation dans un exemple particulier ;

Les Figs. 9 et 10 représentent la mesure du coefficient d'atténuation respectivement pour un premier canal d'énergie et un second canal d'énergie.

## EXPOSÉ DÉTAILLÉ DE MODES DE RÉALISATION PARTICULIERS

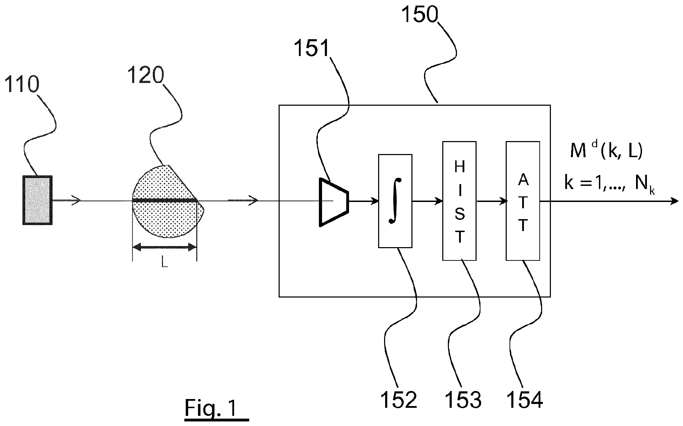

Avant de permettre une meilleure compréhension du procédé de correction selon l'invention, nous modéliserons dans un premier temps le phénomène de durcissement de spectre dans le cadre d'un schéma expérimental simple, illustré en Fig. 1.

Ce schéma expérimental utilise une source de rayonnement, 110, par exemple une source de rayonnement X ou gamma. Le faisceau de photons émis par la source traverse un objet, 120, homogène, dont on souhaite mesurer l'atténuation ou plus précisément le coefficient d'atténuation linéique, dénommé ci-après plus simplement coefficient d'atténuation. Après avoir traversé l'objet, le faisceau arrive sur le détecteur d'un spectromètre à conversion directe, 150. Le détecteur, 151, est relié au dispositif d'intégration d'impulsion, 152, fournissant pour chaque impulsion une valeur d'énergie correspondante. Le module de comptage, 153, répartit les valeurs d'énergie ainsi obtenues dans des bandes d'énergie (canaux d'énergie) pour donner le spectre du rayonnement ayant traversé l'objet. Connaissant le spectre du rayonnement de la source ou bien l'ayant préalablement mesuré en absence de l'objet (mesure dite plein flux), un module de calcul, 154, estime l'atténuation par l'objet dans les différentes bandes.

Si l'on note *l* la coordonnée le long du faisceau, l'épaisseur du matériau traversé n'est autre que :

$$L = \int_{\Gamma} dl \qquad (1)$$

où $\Gamma$ est l'intersection de la trajectoire du faisceau avec l'objet 120.

Le spectre énergétique du rayonnement ayant traversé l'objet est donné par la loi de Beer-Lambert:

$$n^i(E) = n_0^i(E)e^{-\mu^i(E)L} \qquad (2)$$

où $n_0^i(E)$ est quantité de rayonnement émis par la source, à l'énergie $E$, $n^i(E)$ est la quantité de rayonnement ayant traversé l'objet, à l'énergie $E$ et $\mu^i(E)$ est le coefficient d'atténuation du matériau pour les photons d'énergie $E$. L'indice *i* indique que l'on considère le spectre du rayonnement incident sur le spectromètre, par opposition à l'indice *d*, utilisé dans la suite pour désigner le spectre effectivement mesuré par le spectromètre.

Afin de pouvoir effectuer un traitement vectoriel du spectre de la source, nous supposerons que l'axe des énergies est discrétisé en une pluralité de bandes indexées $h = 1,...,N_h$ de largeur arbitrairement faible (par exemple de l'ordre de 1keV). L'expression (2) se traduit alors sous forme discrète par :

$$n^i(h) = n_0^i(h)e^{-\mu^i(h)L} \qquad (3)$$

Le terme $\mu^i(h)$ représente le coefficient d'atténuation linéaire réelle du matériau, indépendamment de toute mesure.

La grandeur physique $\mu^i(h)L$ représente l'atténuation du rayonnement, ayant traversé l'épaisseur $L$, pour la bande d'énergie $h$ et sera notée par la suite $M^i(h,L)$. Dans le cas où l'objet n'est pas homogène, la trajectoire $\Gamma$ peut être décomposée en segments élémentaires de coefficients d'atténuation $\mu^i(h,l)$ et l'atténuation totale du faisceau pour la bande $h$ est alors simplement :

3

$$n^i(h) = n_0^i(h)\,\mathrm{e}^{-M^i(h,L)} \quad \text{avec} \quad M^i(h,L) = \int_\Gamma \mu^i(h,l)\,dl \qquad (4)$$

Si l'on dispose d'un détecteur idéal, on peut accéder à $n^i(h)$ et en déduire le coefficient d'atténuation sur le trajet du faisceau :

$$\mu^i(h) = -\frac{1}{L}\ln\left(\frac{n^i(h)}{n_0^i(h)}\right) = \frac{\int_\Gamma \mu^i(h,l)\,dl}{L} \qquad (5)$$

On comprendra que le coefficient d'atténuation mesuré par un détecteur idéal est donc égal à la moyenne des coefficients d'atténuation rencontrés, pondérés par les épaisseurs traversées sur le trajet.

En pratique, le spectromètre n'est pas idéal et un photon d'énergie donnée peut générer une réponse dans plusieurs canaux d'énergie adjacents. Les canaux d'énergie utilisés par le détecteur seront indexés par $k = 1,...,N_k$ avec $N_k \ll N_h$ et les densités spectrales mesurées par le spectromètre seront notées $n^d(k)$, $k = 1, .... N_k$.

On comprendra que la discrétisation en bandes d'énergie $h = 1,...,N_h$ peut être rendue arbitrairement fine pour modéliser le spectre théorique alors que la discrétisation en canaux d'énergie $k = 1,...,N_k$ est conditionnée par le spectromètre pour le comptage des impulsions.

Les relations liant les densités réelles $n^d(k)$ et les densités théoriques $n^i(h)$ sont complexes en raison du grand nombre de phénomènes physiques mis en jeu. Si l'on fait abstraction des phénomènes non-linéaires tels que les phénomènes d'empilement, de dérive ou d'effet mémoire du détecteur, les densités réelles peuvent s'exprimer linéairement à partir des densités théoriques sous la forme :

$$n^d(k) = \sum_h n^i(h)\Phi(k,h) \qquad (6)$$

La relation (6) peut s'exprimer de manière équivalente sous la forme matricielle suivante :

$$\mathbf{n^d} = \Phi \mathbf{n^i} \qquad (7)$$

où $\mathbf{n^d} = (n^d(1),..., n^d(N_k))^T$ est le vecteur des densités spectrales mesurées par le spectromètre, $\mathbf{n^i} = (n^i(1),..., n^i(N_h))^T$ est le vecteur des densités spectrales de la source et $\Phi$ est la matrice de taille $N_k \times N_h$ formée par les coefficients $\Phi(k,h)$, $k=1,..., N_k$, $n=1,..., N_h$.

L'expression (7) donne la densité spectrale mesurée par le détecteur dans des conditions de plein flux à partir de la densité spectrale de la source. Plus précisément, l'élément $\Phi(k,h)$ de la matrice $\Phi$ est le nombre moyen de photons détectés dans le canal d'énergie $k$ lorsque la source émet un photon dans la bande d'énergie $h$. La matrice $\Phi$ ne dépend par conséquent que du détecteur et sera dénommée pour cette raison matrice de réponse du détecteur. Pour un détecteur idéal $N_k = N_h$ et la matrice $\Phi$ n'est autre que la matrice identité.

On rappelle que l'atténuation du rayonnement mesurée au moyen d'un détecteur idéal est donnée par l'expression (4), soit :

$$M^i(h,L) = -\ln\frac{n^i(h,L)}{n_0^i(h,L)} \qquad (8)$$

En revanche, lorsque l'atténuation du rayonnement est mesurée à l'aide d'un détecteur réel:

$$M^d(k,L) = -\ln \frac{n^d(k,L)}{n_0^d(k,L)} = -\ln \frac{\sum_h \Phi(k,h) n_0^i(h) e^{-M^i(h,l)}}{\sum_h \Phi(k,h) n_0^i(h)}$$

$$M^d(k,L) = -\ln \frac{n^i(k,L)}{n_0^i(k,L)} = -\ln \frac{\sum_h \Phi(k,h) n_0^i(h) e^{-M^i(h,L)}}{\sum_h \Phi(k,h) n_0^i(h)} \qquad (9\text{-}1)$$

soit encore sous la forme plus condensée suivante :

$$M^d(k,L) = -\ln\left(\sum_h \Psi(k,h) e^{-M^i(h,L)}\right) \qquad (9\text{-}2)$$

$$\Psi(k,h) = \frac{\Phi(k,h) n_0^i(h)}{\sum_h \Phi(k,h) n_0^i(h)} \ .$$

en ayant défini les coefficients $\Psi(k,h)$ par

On comprend donc que, dans le cas d'un objet homogène, si l'atténuation mesurée à l'aide d'un détecteur idéal dépend bien linéairement de l'épaisseur traversée par le faisceau ($M^i(h,L) = \mu^i(h)L$), il n'en va plus de même pour

$$(M^d(k,L) = -\ln\left(\sum_{h=1}^{N_h} \Psi(k,h) e^{-\mu^i(h)L}\right)),$$

un détecteur réel                                    autrement dit le coefficient d'atténuation mesuré

$$\mu^d(k,L) = \frac{1}{L} M^d(k,L)$$

dépend de l'épaisseur $L$ traversée par le faisceau. La même conclusion vaut *a fortiori* pour un matériau inhomogène.

La matrice $\Psi$ de taille $N_k \times N_h$ dépend à la fois de la source et de la réponse du détecteur, elle sera pour cette raison dénommée ci-après matrice de réponse du système. Un élément $\Psi(k,h)$ de la matrice représente, dans des conditions de plein flux (donc en absence d'objet entre la source et le détecteur), la probabilité qu'un photon détecté dans le canal $k$ soit en fait issu d'un canal $h$ de la source, autrement dit le coefficient $\Psi(k,h)$, $k \neq h$, représente la probabilité de mauvaise détection dans le canal $k$ sachant que le photon émis était dans le canal $h$. De même le coefficient $\Psi(k,k)$ représente la probabilité de bonne détection d'un photon dans le canal $k$. Lorsque le système est idéal, $N_k = N_h$ et la matrice $\Psi$ est, comme la matrice de réponse du détecteur, égale à la matrice identité de taille $N_h \times N_h$.

Du fait de la convexité de la fonction -ln(x), on a la majoration suivante :

$$M^d(k,L) \leq \sum_h \Psi(k,h) M^i(h,L) \qquad (10)$$

On définit alors l'atténuation linéaire équivalente $M^{lin}(k,L)$ par :

$$M^{lin}(k,L) = \sum_h \Psi(k,h) M^i(h,L) \qquad (11)$$

Pour un matériau homogène, on peut définir de manière similaire, le coefficient d'atténuation linéaire équivalente par :

$$\mu^{lin}(k) = \sum_h \Psi(k,h)\mu^i(h) \qquad (12)$$

Ainsi, l'atténuation mesurée, respectivement le coefficient d'atténuation mesuré, est majoré(e) par l'atténuation linéaire équivalente, respectivement par le coefficient d'atténuation linéaire équivalente :

$$M^d(k,L) \le M^{lin}(k,L) \text{ et } \mu^d(k) \le \mu^{lin}(k) \qquad (13)$$

Les expressions (11) et (12) peuvent être reprises de manière plus condensées sous forme matricielle :

$$\mathbf{M}^{lin}(L) = \Psi\mathbf{M}^i(L) \text{ et } \mu^{lin} = \Psi\mu^i \qquad (14)$$

où $\Psi$ est la matrice $N_k \times N_h$ constituée des éléments $\Psi(k,h)$, $\mathbf{M}^{lin} = (M^{lin}(1,L),...,M^{lin}(N_k,L))^T$ et $\mu^{lin} = (\mu^{lin}(1),...,\mu^{lin}(N_k))^T$.

Il est important de remarquer que l'atténuation mesurée $M^d(k,L)$ s'approche asymptotiquement de $M^{lin}(k,L)$ et lorsque l'épaisseur traversée $L$ tend vers zéro. De manière similaire, pour un matériau homogène, le coefficient d'atténuation mesuré $\mu^d(k,L) = \dfrac{M^d(k,L)}{L}$ s'approche asymptotiquement de $\mu^{lin}(k)$ lorsque l'épaisseur traversée $L$ tend vers zéro.

Physiquement, le coefficient d'atténuation linéaire équivalente représente le coefficient d'atténuation mesuré d'un échantillon homogène très fin de l'objet. *A contrario,* lorsque l'objet n'est pas homogène, le coefficient d'atténuation linéaire équivalente représente la moyenne du coefficient d'atténuation linéaire sur la trajectoire du faisceau. En effet :

$$\mu^{lin}(L) = \frac{\mathbf{M}^{lin}(L)}{L} = \frac{1}{L}\Psi\mathbf{M}^i(L) = \Psi\frac{1}{L}\int_T \mu^i(l)dl = \frac{1}{L}\int_T \mu^{lin}(l)dl \qquad (15)$$

En revanche, on notera que cette propriété de linéarité n'est pas vérifiée pour le coefficient d'atténuation mesuré $\mu^d(k,L) = \dfrac{1}{L}M^d(k,L)$.

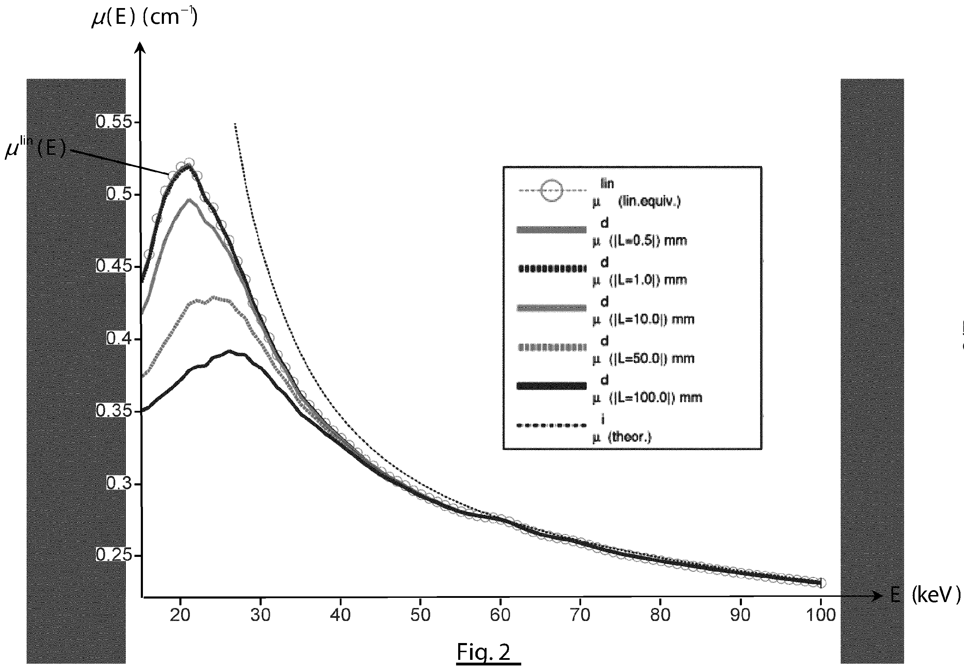

La Fig. 2 représente des courbes de coefficients d'atténuation mesurés à l'aide d'un spectromètre à conversion directe, en fonction de l'énergie. Ces courbes sont relatives à des échantillons de polyoxyméthylène de différentes épaisseurs. La source de rayonnement est une source de rayons X à base de tungstène et le détecteur à semi-conducteur un détecteur CdTe ligne avec un pas de 0.8mm et une épaisseur de 3mm. Les canaux d'énergie du détecteur ont une largeur de 1keV.

La courbe désignée par des petits cercles correspond au coefficient d'atténuation linéaire équivalente $\mu^{lin}$. Comme prédit, on remarque que pour de faibles épaisseurs les courbes des coefficients d'atténuation mesurés sont quasi confondues avec la courbe du coefficient d'atténuation linéaire équivalente.

L'idée à la base de l'invention est, pour une mesure d'atténuation donnée, d'estimer l'atténuation linéaire équivalente ou le coefficient d'atténuation linéaire équivalente, en utilisant un modèle de l'atténuation du matériau.

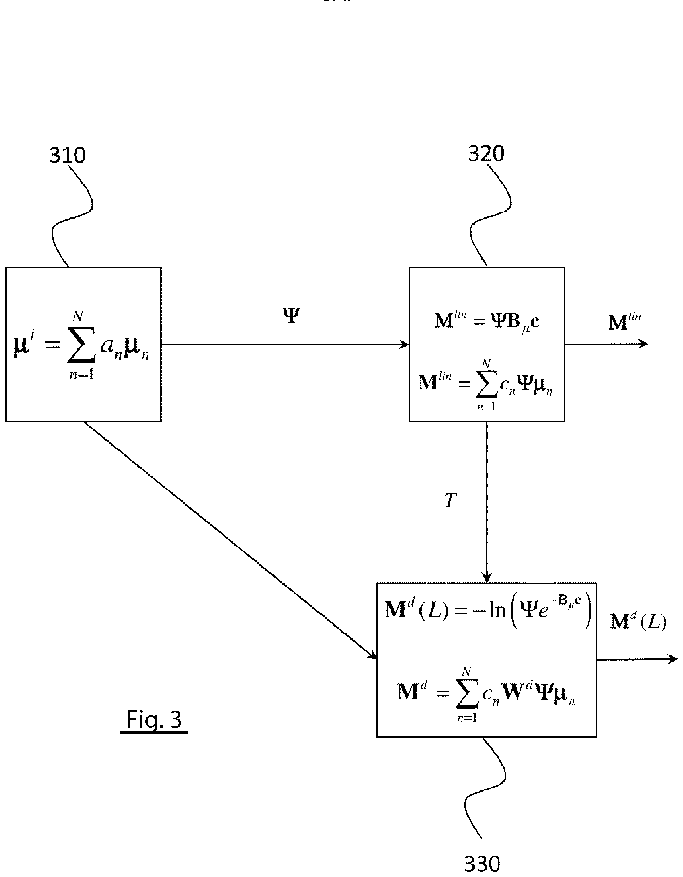

La Fig. 3 représente une modélisation d'une mesure d'atténuation par un spectromètre à conversion directe à partir d'un modèle de l'atténuation du matériau.

On a représenté en 310 un modèle de l'atténuation du matériau. Selon ce modèle l'atténuation/le coefficient d'atténuation (linéique) réelle du matériau se décompose selon une base de vecteurs d'atténuation, caractéristique du matériau.

Ainsi, le coefficient d'atténuation réelle est décomposé selon une base de vecteurs d'atténuation $\mu_n$, $n=1,...,N$:

$$\mu^i(h) = \sum_{n=1}^N a_n\mu_n(h), \ h = 1,...,N_h \qquad (16\text{-}1)$$

soit encore, sous forme vectorielle :

$$\mu^{i} = \sum_{n=1}^{N} a_{n}\mu_{n} \qquad (16\text{-}2)$$

où $\mu^{i} = (\mu^{i}(1),...,\mu^{i}(N_h))^{T}$ est le vecteur des coefficients d'atténuation réelle du matériau aux énergies 1,..., $N_h$ et $\mu_n$ $=(\mu_n(1),...,\mu_n(N_h))^{T}$, $n = 1,..., N$ sont les vecteurs de la base caractéristique du matériau et $a_n$, $n= 1,..., N$, sont les composantes de $\mu$ dans cette base. Il est essentiel de noter que les composantes $a_n$ ne dépendent pas de l'énergie.

La relation (16-1) peut notamment résulter de la discrétisation de la fonction d'atténuation du matériau lorsque celle-ci peut s'exprimer selon une combinaison linéaire de fonctions élémentaires :

$$\mu^{i}(E) = \sum_{n=1}^{N} a_{n}\mu_{n}(E) \qquad (17)$$

où $\mu^{i}(E)$ est la fonction d'atténuation du matériau en fonction de l'énergie $E$ du rayonnement et $\mu_n(E)$, $n= 1,..., N$ forment une base de fonctions.

Pour une épaisseur $L$ traversée par le faisceau, l'atténuation peut se décomposer de manière similaire à (16-1), en utilisant la même base caractéristique :

$$M\left(h,L\right) = \sum_{n=1}^{N} c_{n}(L)\mu_{n}(h) \ , h = 1,...,N_{h} \qquad (18\text{-}1)$$

soit encore, sous forme vectorielle :

$$\mathbf{M}\left(L\right) = \sum_{n=1}^{N} c_{n}(L)\mu_{n} \qquad (18\text{-}2)$$

avec $c_n(L) = L.a_n$. Les composantes $c_n(L)$ ne dépendent que de l'épaisseur $L$ et non de l'énergie $h$. Elles représentent physiquement des longueurs d'atténuation équivalente pour les différents vecteurs de la base caractéristique.

Selon une première variante, les vecteurs de la base caractéristique sont relatifs à des mécanismes physiques distincts. Ainsi, on sait que les rayons X sont essentiellement atténués en raison de l'effet Compton, d'une part, et de l'effet photoélectrique, d'autre part. Dans ce cas, la relation (16-2) peut s'exprimer sous la forme suivante :

$$\mu^{i} = a_{Co}\mu_{Co} + a_{Ph}\mu_{Ph} \qquad (19)$$

où $\mu_{Co}$ est le vecteur de coefficients d'atténuation due à l'effet Compton et $\mu_{Ph}$ est le vecteur de coefficients d'atténuation due à l'effet photoélectrique. Les coefficients $a_{Co}$ et $a_{Ph}$ ne dépendent pas de l'énergie. En revanche, les vecteurs $\mu_{Co}$ et $\mu_{Ph}$ et, plus généralement, les fonctions d'atténuation $\mu_{Co}(E)$ et $\mu_{Ph}(E)$ dépendent chacun de l'énergie E selon des lois de dépendance distinctes.

Selon une seconde variante, les vecteurs de la base caractéristique sont relatifs à différents matériaux de référence. En effet, on sait qu'un coefficient d'atténuation d'un matériau peut être considéré comme la combinaison linéaire de deux coefficients d'atténuation de deux matériaux connus, voire davantage, et cela dans une gamme d'énergie variant entre 10 keV et 200 keV.

A titre exemple, si le matériau de l'objet est un mélange de matériaux élémentaires X,Y,Z, la relation (16-2) peut s'écrire sous la forme suivante :

$$\mu^{i} = a_{X}\mu_{X} + a_{Y}\mu_{Y} + a_{Z}\mu_{Z} \qquad (20)$$

$\mu_X, \mu_Y, \mu_Z$ sont respectivement les vecteurs des coefficients d'atténuation des matériaux élémentaires X,Y,Z.

Quelle que soit la base caractéristique choisie $\mu_n$, $n=1,..., N$, les coefficients $\mu_n(h)$, $h=1,..., N_h$, constituant les vecteurs de la base, sont supposés être connus au moyen d'une phase de calibration ou de simulation préalable.

D'une façon générale, la base est constituée de N vecteurs. En particulier, chaque vecteur est représentatif d'une propriété d'un matériau donné en fonction de l'énergie. Dans les exemples exposés dans cette description, les vecteurs sont des coefficients d'atténuation, en particulier des coefficients d'atténuation linéaires. Il pourrait naturellement s'agit de coefficients d'atténuation massiques.

Le bloc 320 représente un modèle linéarisé du spectromètre à conversion directe, représenté par la matrice de réponse du système, $\Psi$. A l'aide du modèle d'atténuation, 310, et du modèle linéarisé du spectromètre, 320, le coefficient d'atténuation linéaire équivalente s'exprime au moyen des relations (12) et (16-1) :

$$\mu^{lin}(k) = \sum_{h=1}^{N_h} \sum_{n=1}^{N} a_n \Psi(k,h) \mu_n(h) \qquad (21\text{-}1)$$

De manière similaire, l'atténuation linéaire équivalente s'exprime à l'aide des relations (12) et (18-1) :

$$M^{lin}(k,L) = \sum_{h=1}^{N_h} \sum_{n=1}^{N} c_n(L) \Psi(k,h) \mu_n(h) \qquad (21\text{-}2)$$

Les expressions (21-1) et (21-2) peuvent plus simplement être formulées de manière matricielle :

$$\mu^{lin} = \Psi B_\mu a \qquad (22\text{-}1)$$

et

$$M^{lin} = L\Psi B_\mu a = \Psi B_\mu c \qquad (22\text{-}2)$$

où $\Psi$ est la matrice de réponse du système, $B_\mu$ est la matrice de taille $N_h \times N$ dont les colonnes sont les vecteurs $\mu^n$, $n = 1,...,N$ de la base caractéristique, $a = (a_1,...,a_N)^T$ et $c = (La_1,..., La_N)^T$.

Les expressions (22-1) et (22-2) signifient que le coefficient d'atténuation linéaire équivalente/ l'atténuation linéaire équivalente peut se décomposer dans une seconde base, image de la base caractéristique par la réponse linéarisée du système, représentée par la matrice $\Psi$. Autrement dit, la base image est constituée par les vecteurs colonnes de la matrice $A_\mu = \Psi B_\mu$ de taille $N_k \times N$ avec les mêmes composantes que celles du coefficient d'atténuation/de l'atténuation réelle dans la base caractéristique.

Les expressions (22-1) et (22-2) fournissent un modèle linéaire des mesures d'atténuation puisque les composantes de $\mu^{lin}$ ne dépendent pas de $L$ et celles de $\mathbf{M}^{lin}$ sont proportionnelles à $L$.

Le bloc 330 représente un modèle des mesures d'atténuation au moyen du spectromètre réel. A une décomposition du coefficient d'atténuation réel $\mu^i$ dans la base $\mathbf{B}_\mu$ on associe une mesure $\mathbf{M}^d$ d'atténuation du spectromètre. Plus précisément, à une décomposition $a = (a_1,...,a_N)^T$ de $\mu^i$ dans cette base, on associe la mesure d'atténuation :

$$\mathbf{M}^d(L) = -\ln\left(\Psi e^{-LB_\mu a}\right) = -\ln\left(\Psi e^{-B_\mu c}\right) \qquad (23)$$

où les expressions $e^x$ et $\ln(\mathbf{X})$, $\mathbf{X}$ étant un vecteur, représentent respectivement des vecteurs de même taille que $\mathbf{X}$ dont les éléments sont respectivement $e^{X(m)}$ et $\ln(X(m))$ où les $X(m)$ sont les éléments de $\mathbf{X}$.

Le vecteur $\mathbf{M}_c = \mathbf{B}_\mu c$, $\mathbf{M}_c = (M_c(1),...,M_c(N_h))^T$, représente la mesure que l'on obtiendrait si le détecteur était idéal, la matrice $\Psi$ étant égale à l'identité, avec $N_k = N_h$.

La transformation $T$ entre 320 et 330 permet de passer directement du modèle linéaire au modèle non linéaire du spectromètre réel. Cette transformation est en fait une fonction de dispersion opérant sur les composantes du vecteur d'atténuation linéaire équivalente $\mathbf{M}^{lin}$ dans l'image de la base caractéristique. Plus précisément, à un vecteur

$$\mathbf{M}^{lin} = \mathbf{A}_\mu c = \sum_{n=1}^{N} c_n \Psi \mu_n \,, \qquad \qquad \mathbf{M}^d = \sum_{n=1}^{N} c_n \mathbf{W}^d \Psi \mu_n$$

on associe le vecteur $T(\mathbf{M}^{lin}) = \mathbf{M}^d$ avec où $\mathbf{W}^d = \mathbf{Diag}(W^d(1, L),...,W^d(N_k,L))$ est une matrice diagonale de taille $N_k \times N_k$ dont les éléments sont donnés par :

$$W^d(k, L) = \frac{-\ln\left(\sum_{h=1}^{N_h} \Psi(k,h) e^{-M_c(h)}\right)}{\sum_{h=1}^{N_h} \Psi(k,h) M_c(h)} \qquad (24)$$

On comprendra que la transformation $T$ fait correspondre à un scalaire $C_n$, s'appliquant de manière identique à toutes les composantes en énergie d'un vecteur $\Psi\mu_n$, une matrice $T(c_n) = c_n \mathbf{W}^d$ de taille $N_k$ dont les coefficients diagonaux peuvent différer. Ainsi la transformation $T$ représente un mécanisme de dispersion en énergie. Elle peut être vue comme une déformation de chaque coefficient $c_n$ en fonction de la composante en énergie à laquelle il s'applique ou, de manière équivalente comme une déformation des vecteurs $\Psi\mu_n$, $n=1,..., N$ la matrice $\mathbf{W}^d$ pondérant différemment les composantes en énergie de ces vecteurs. On notera que lorsque l'épaisseur traversée $L$ est faible, les valeurs sont telle que $c_n\mu_n(h) \ll 1$ et la matrice $\mathbf{W}^d$ est proche de la matrice identité. Du fait de la convexité de la fonction $-\ln(x)$ les éléments $W^d(k,L)$ sont compris, au sens strict, entre les valeurs 0 et 1.

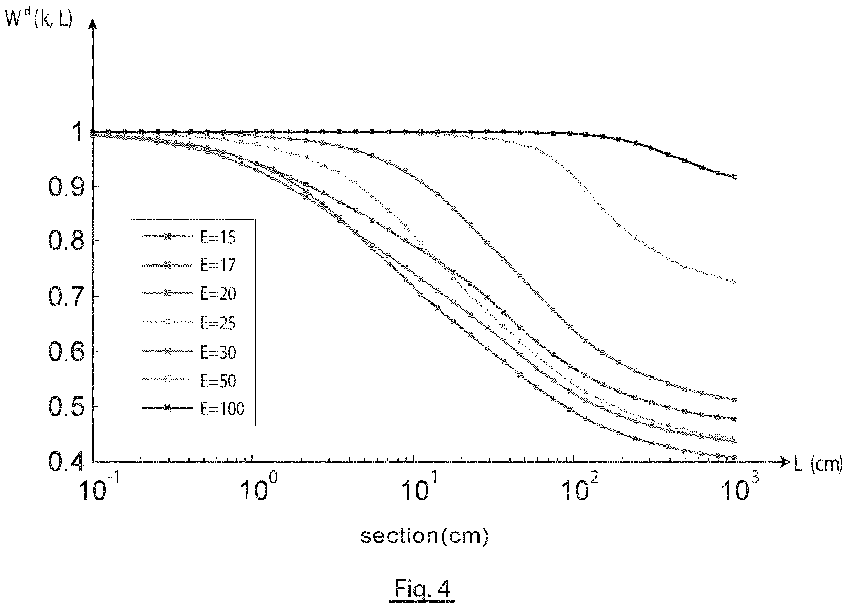

La Fig. 4 représente la dispersion des coefficients $c_n$ en fonction de l'épaisseur traversée $L$. Plus précisément,

$$W^d(k, L) = \frac{-\ln\left(\sum_{h=1}^{N_h} \Psi(k,h) e^{-M_c(h)}\right)}{\sum_{h=1}^{N_h} \Psi(k,h) M_c(h)}$$

cette figure représente la fonction de déformation de chacune des $N_k$ composantes du vecteur $\mathbf{M}^{lin}$ dans la base image, en fonction de l'épaisseur traversée $L$. On voit clairement que, pour de faibles valeurs de $L$, les coefficients de pondération $W^d(k, L)$ sont proches de 1 et par conséquent que les composantes ne sont pas déformées. En revanche la déformation devient plus importante pour des valeurs d'épaisseur plus élevées, notamment dans les faibles énergies.

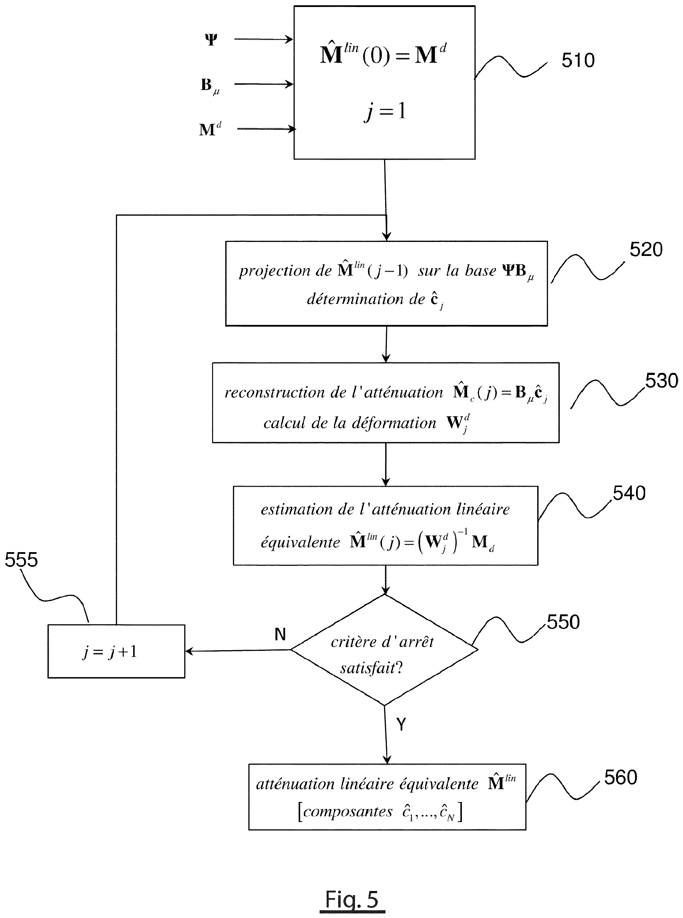

La Fig. 5 représente une méthode de linéarisation de mesures d'atténuation obtenues au moyen d'un spectromètre à conversion directe, selon un mode de réalisation de l'invention.

La méthode de linéarisation suppose que l'on ait effectué au moins une mesure d'atténuation dans une pluralité de bandes d'énergie, $k=1,...,N_k$, au moyen dudit spectromètre. Cette mesure est représentée par un vecteur $\mathbf{M}^d = (M^d(1),..., M^d(N_k))^T$ où $M^d(k)$ est obtenu comme le logarithme naturel du rapport entre le nombre de photons détectés dans le canal $k$ avec et sans l'objet.

On suppose que l'on connaît également la matrice de réponse du système, $\Psi$, au moyen d'une calibration ou d'une simulation préalable. On rappelle que cette matrice de taille $N_k \times N_h$ donne, dans des conditions de plein flux, la probabilité qu'un photon soit détecté dans un canal $k$ du spectromètre lorsqu'il a été émis dans une bande d'énergie $h$.

Enfin, on suppose que l'on connaît une base de vecteurs, $\mathbf{B}_\mu$, caractéristique de l'atténuation du matériau, autrement dit une pluralité $N$ de vecteurs sur lesquels on peut décomposer le coefficient d'atténuation réelle du matériau, comme exposé plus haut.

A l'étape 510, on initialise l'estimation du vecteur d'atténuation linéaire équivalente, $\mathbf{M}^{lin}$, par le vecteur d'atténuation mesurée $\mathbf{M}^d$, soit $\hat{\mathbf{M}}^{lin}(0) = \mathbf{M}^d$. On peut en effet considérer, en première approximation, que le vecteur d'atténuation mesurée est une estimation du vecteur d'atténuation linéaire équivalente. Le compteur d'itération $j$ est initialisé à 1.

La méthode de linéarisation des mesures d'atténuation opère ensuite par itérations successives, en raffinant au fur et à mesure l'estimation de $\mathbf{M}^{lin}$. On note $\hat{\mathbf{M}}^{lin}(j)$, l'estimation de $\mathbf{M}^{lin}$ à l'itération $j$.

A l'étape 520, on projette l'estimation de $\mathbf{M}^{lin}$ obtenue à l'itération précédente, soit $\hat{\mathbf{M}}^{lin}(j-1)$, sur la base $\mathbf{A}_\mu = \Psi\mathbf{B}_\mu$, image de la base caractéristique $\mathbf{B}_\mu$ par la réponse du système $\Psi$, autrement dit on détermine les coefficients $\hat{c}_n(j)$, $n = 1,.., N$, tels que :

$$\hat{\mathbf{M}}^{lin}(j-1) = \sum_{n=1}^{N} \hat{c}_n(j)\Psi\mu_n = \mathbf{A}_\mu \hat{\mathbf{c}}(j) \qquad (25)$$

où $\hat{\mathbf{c}}(j) = (\hat{c}_1(j),...,\hat{c}_N(j))^T$. Etant donné que l'on a généralement $N \ll N_k$, le système de $N_k$ équations à $N$ inconnues (25) est surdéterminé et on le résout selon un critère des moindres carrés. Le vecteur $\hat{\mathbf{c}}(j)$ est par exemple déterminé par :

$$\hat{\mathbf{c}}(j) = \mathbf{A}_{\mu}^{\dagger}\hat{\mathbf{M}}^{lin}(j-1) \tag{26}$$

où $\mathbf{A}_{\mu}^{\dagger} = \mathbf{A}_{\mu}^{T}\left(\mathbf{A}_{\mu}\mathbf{A}_{\mu}^{T}\right)^{-1}$ est la pseudo-inverse de la matrice $\mathbf{A}_{\mu}$.

A l'étape 530, on calcule la déformation non linéaire à appliquer aux composantes de $\hat{\mathbf{M}}^{lin}(j-1)$ dans la base image, $\Psi\boldsymbol{\mu_n}$, pour obtenir l'atténuation mesurée au moyen du spectromètre :

$$W_j^d(k) = \frac{-\ln\left(\sum_{h=1}^{N_h}\Psi(k,h)e^{-\hat{M}_c(j)(h)}\right)}{\sum_{h=1}^{N_h}\Psi(k,h)\hat{M}_c(j)(h)} \tag{27}$$

où $\hat{\mathbf{M}}_c(j) = \mathbf{B}_{\mu}\hat{\mathbf{c}}_j$. Autrement dit, chaque composante $\hat{c}_n(j)$ est dispersée en énergie et donne lieu à une pluralité de coefficients pour les différentes énergies : $\hat{c}_n(j)W^d(1),...,\hat{c}_n(j)W^d(N_k)$.

A l'étape 540, on estime le vecteur d'atténuation linéaire équivalente à partir du vecteur d'atténuation $\mathbf{M}^d$:

$$\hat{\mathbf{M}}^{lin}(j) = \left(\mathbf{W}_j^d\right)^{-1}\mathbf{M}^d \tag{28}$$

c'est-à-dire $\hat{M}^{lin}(j)(k) = \dfrac{M^d(k)}{\hat{W}_j^d(k)}$, $k=1,...,N_k$.

A l'étape 550, on vérifie si un critère d'arrêt est satisfait.

Selon une première variante, le critère d'arrêt est un nombre maximal prédéterminé d'itérations $j_{max}$.

Selon une seconde variante, le critère d'arrêt est une condition de convergence. Par exemple, on pourra décider d'arrêter les itérations dès lors que :

$$\frac{\left\|\hat{\mathbf{M}}^{lin}(j) - \hat{\mathbf{M}}^{lin}(j-1)\right\|}{\left\|\hat{\mathbf{M}}^{lin}(j)\right\|} \le \varepsilon_{Th} \tag{29}$$

où $\varepsilon_{Th}$ est un seuil prédéterminé et $\|\ \|$ désigne la norme euclidienne.

Si le critère d'arrêt est vérifié, la méthode de linéarisation se poursuit à l'étape 560. A défaut, l'indice d'itération $j$ est incrémenté en 555 et l'on retourne à l'étape 520 pour une nouvelle itération.

A l'étape 560, on fournit l'estimation de l'atténuation linéaire équivalente $\hat{\mathbf{M}}^{lin} = (M^{lin}(1),..., \hat{M}^{lin}(N_k))^T$ pour les différents canaux d'énergie du spectromètre.

La méthode de linéarisation peut fournir alternativement le vecteur des composantes $\hat{\mathbf{c}} = (\hat{c}_1,..., \hat{c}_N)^T$ de l'atténuation linéaire équivalent dans l'image de la base caractéristique $\Psi\mathbf{B}_{\mu}$. Ces composantes permettent de caractériser le matériau de l'objet, et le cas échéant, lorsque les vecteurs de la base caractéristique sont relatifs à des matériaux de référence, d'en déterminer la composition.

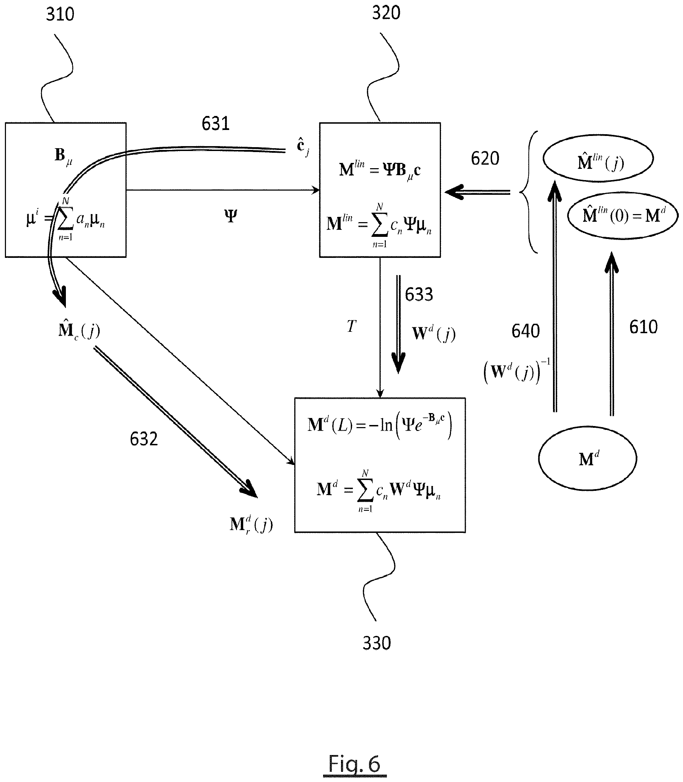

On a représenté en Fig. 6 sous forme de graphe la mise en œuvre de la méthode de linéarisation de mesures d'atténuation à partir du modèle de la Fig. 3.

On y retrouve le modèle 310 de l'atténuation du matériau utilisant la base caractéristique $\mathbf{B}_{\mu}$, le modèle linéaire des mesures d'atténuation, 320, utilisant l'image de la base caractéristique par la réponse du système, $\Psi\mathbf{B}_{\mu}$, ainsi le modèle non linéaire des mesures d'atténuation 330, associé au spectromètre.

L'opération d'initialisation, 610, consiste en une approximation de l'atténuation linéaire équivalente par la mesure d'atténuation $\mathbf{M}^d$. Cette première estimation revient à supposer que la matrice de déformation $\mathbf{W}_0^d$ est égale à la matrice unité.

La première opération, 620, est une projection de l'estimation de l'atténuation linéaire équivalente $\hat{\mathbf{M}}^{lin}(j - 1)$ sur la base $\Psi\mathbf{B}_\mu$ du modèle linéaire. Elle permet d'obtenir les composantes de $\mathbf{M}^d$ dans cette base, représentées par $\hat{\mathbf{c}}_j$.

A partir de cette projection, on peut remonter en 631 à une estimation de l'atténuation du matériau, exprimée dans la base caractéristique, soit $\hat{\mathbf{M}}_c(j) = \mathbf{B}_\mu\hat{\mathbf{c}}_j$.

L'opération 632 consiste à obtenir la mesure de l'atténuation au moyen du spectromètre en supposant que l'atténuation du matériau est égale à $\hat{\mathbf{M}}^i(j)$. Cette mesure de l'atténuation est calculée grâce à l'expression (23), soit :

$$\mathbf{M}_r^d(j) = -\ln\left(\Psi e^{-\mathbf{B}_\mu\hat{\mathbf{c}}_j}\right) \qquad (30)$$

où $\mathbf{M}_r^d(j)$ est la mesure d'atténuation reconstruite à partir des composantes $\hat{\mathbf{c}}_j$.

A partir de la mesure reconstruite $\mathbf{M}_r^d(j)$ et de l'estimation de l'atténuation linéaire équivalente obtenue à l'itération précédente, $\hat{\mathbf{M}}^{lin}(j\text{-}1)$, on détermine en 633 la transformation $T$ permettant de passer du modèle linéaire au modèle non-linéaire, c'est-à-dire la matrice diagonale $\mathbf{W}_j^d$ telle que $\mathbf{W}_j^d\hat{\mathbf{M}}^{lin}(j-1) = \mathbf{M}_r^d(j)$.

Les opérations 631 à 633 sont réalisées au cours de l'étape 530 de la Fig. 5 telle que décrite précédemment.

On utilise alors la matrice $\mathbf{W}_j^d$ (la transformation $T^{-1}$) pour obtenir en 640 une nouvelle estimation de l'atténuation linéaire équivalente grâce à l'expression (28), soit

$$\hat{\mathbf{M}}^{lin}(j) = \left(\mathbf{W}_j^d\right)^{-1}\mathbf{M}^d.$$

Les opérations 620 à 640 sont itérées jusqu'à ce que l'estimation converge ou bien jusqu'à ce qu'un nombre maximal prédéterminé d'itérations soit atteint.

Nous illustrerons ci-après à l'aide d'un exemple l'effet correcteur de la linéarisation de mesures d'atténuation obtenues au moyen d'un spectromètre.

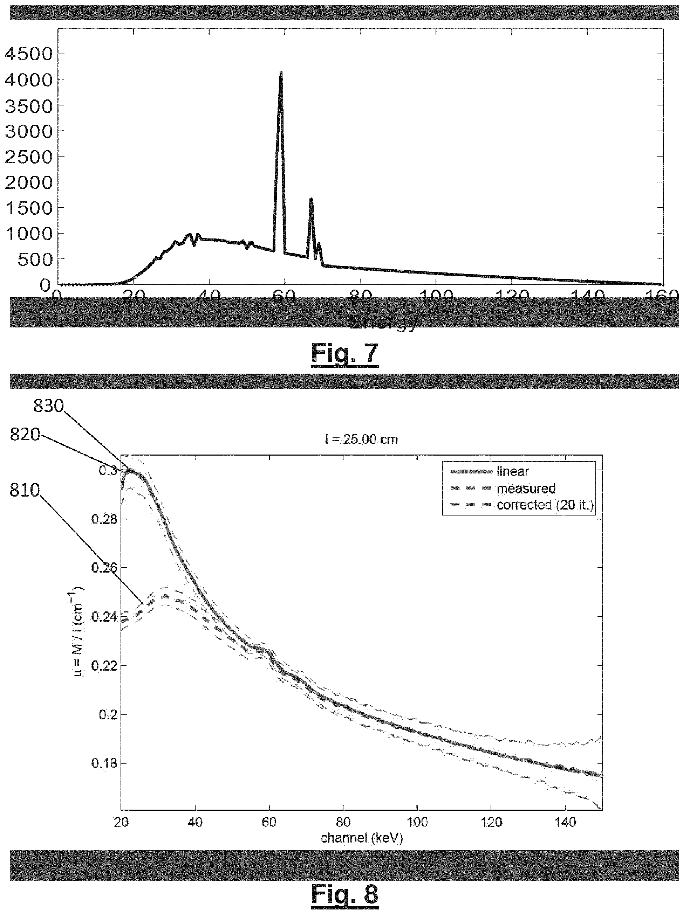

La source du spectromètre est ici une source de rayonnement X utilisant une cathode en tungstène. Le spectre de la source est représenté en Fig. 7.

Le détecteur du spectromètre est un capteur en CdTe pixélisé en 16 pixels (capteurs élémentaires) avec un pas de 0.8 mm et une épaisseur de 3mm, polarisé à -1kV.

L'objet à analyser est en polyméthacrylate de méthyle (PMMA ou Plexiglas ™).

La base caractéristique utilisée est une base relative à deux matériaux de référence à savoir le polyéthylène (PE) et le polyoxyméthylène (POM / Delrin ™).

La Fig. 8 montre l'effet correcteur apporté par la méthode de linéarisation dans le cadre d'une mesure dite « full-spectral », c'est-à-dire lorsque le nombre de canaux d'énergie est égal au nombre de bandes, $N_k = N_h$ (ici 256 canaux de largeur 1keV). L'acquisition des mesures d'atténuation ($\mathbf{M}^d$) est effectuée avec un objet en POM dont l'épaisseur est de $L = 25cm$.

On voit sur la figure 8 que la mesure brute (courbe en traits discontinus 810) fait apparaitre une distorsion par rapport aux vrais coefficients d'atténuation linéaire équivalente (courbe en trait plein 820). Cette distorsion est plus visible pour les basses énergies. On remarque que la correction obtenue grâce à la méthode de linéarisation selon l'invention (courbe en traits discontinus 830) restore quasi-complètement les mesures théoriques (spectromètre idéal).

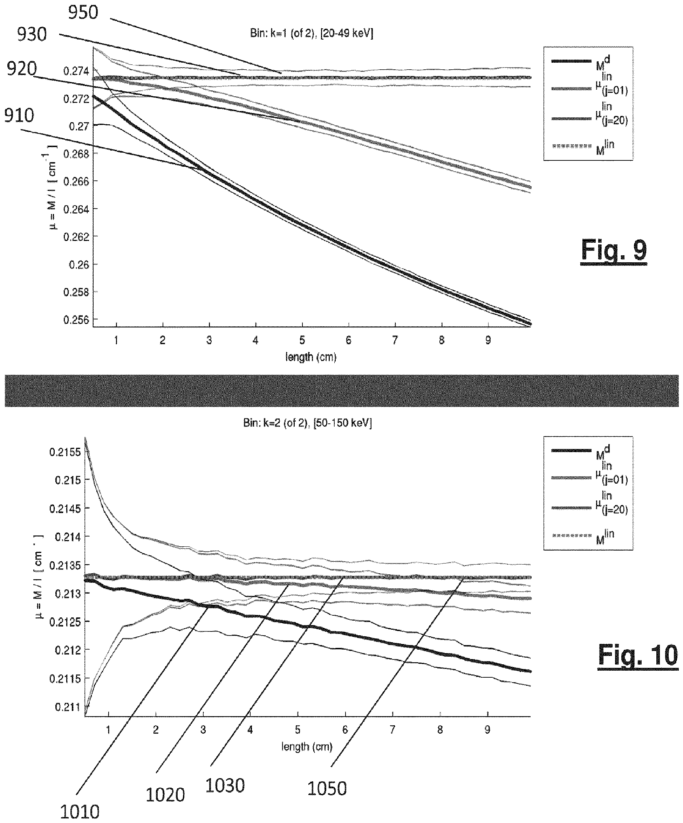

Les Figs. 9 et 10 montrent l'indépendance des mesures de coefficient d'atténuation en fonction de l'épaisseur de matériau traversée, après linéarisation par la méthode selon l'invention $(\hat{\boldsymbol{\mu}}^{lin} = \frac{1}{L}\hat{\mathbf{M}}^{lin})$.

Le nombre de canaux d'énergie du spectromètre est de 2 ($N_k = 2$).

Les Fig. 9 et 10 sont respectivement relatives au premier canal d'énergie (20-49 keV) et au second canal d'énergie.

On a respectivement désigné par 910 et 1010 les courbes de coefficient d'atténuation avant correction, par 920 et 1020, les courbes de coefficient d'atténuation après une itération, et par 930, 1040 les courbes de coefficient d'atténuation après 20 itérations.

On a également représenté par les courbes en traits discontinus 950 et 1050 les mesures théoriques (spectromètre idéal).

On remarque qu'après 20 itérations le coefficient d'atténuation linéaire équivalent est quasi-constant et confondu avec la valeur théorique.

On utilise alors la matrice $\mathbf{W}_j^d$ (la transformation $T^{-1}$) pour obtenir en 640 une nouvelle estimation de l'atté-

$$\hat{\mathbf{M}}^{lin}(j) = \left(\mathbf{W}_j^d\right)^{-1}\mathbf{M}^d .$$

nuation linéaire équivalente grâce à l'expression (28), soit

Les opérations 620 à 640 sont itérées jusqu'à ce que l'estimation converge ou bien jusqu'à ce qu'un nombre maximal prédéterminé d'itérations soit atteint.

Nous illustrerons ci-après à l'aide d'un exemple l'effet correcteur de la linéarisation de mesures d'atténuation obtenues au moyen d'un spectromètre.

La source du spectromètre est ici une source de rayonnement X utilisant une cathode en tungstène. Le spectre de la source est représenté en Fig. 7.

Le détecteur du spectromètre est un capteur en CdTe pixélisé en 16 pixels (capteurs élémentaires) avec un pas de 0.8 mm et une épaisseur de 3mm, polarisé à -1kV.

L'objet à analyser est en polyméthacrylate de méthyle (PMMA ou Plexiglas ™).

La base caractéristique utilisée est une base relative à deux matériaux de référence à savoir le polyéthylène (PE) et le polyoxyméthylène (POM / Delrin ™).

La Fig. 8 montre l'effet correcteur apporté par la méthode de linéarisation dans le cadre d'une mesure dite « full-spectral », c'est-à-dire lorsque le nombre de canaux d'énergie est égal au nombre de bandes, $N_k = N_h$ (ici 256 canaux de largeur 1keV). L'acquisition des mesures d'atténuation ($\mathbf{M}^d$) est effectuée avec un objet en POM dont l'épaisseur est de $L = 25cm.$

On voit sur la figure 8 que la mesure brute (courbe en traits discontinus 810) fait apparaitre une distorsion par rapport aux vrais coefficients d'atténuation linéaire équivalente (courbe en trait plein 820). Cette distorsion est plus visible pour les basses énergies. On remarque que la correction obtenue grâce à la méthode de linéarisation selon l'invention (courbe en traits discontinus 830) restore quasi-complètement les mesures théoriques (spectromètre idéal).

Les Figs. 9 et 10 montrent l'indépendance des mesures de coefficient d'atténuation en fonction de l'épaisseur de matériau traversée, après linéarisation par la méthode selon l'invention $(\widehat{\boldsymbol{\mu}}^{lin} = \frac{1}{L}\widehat{\mathbf{M}}^{lin}).$

Le nombre de canaux d'énergie du spectromètre est de 2 ($N_k = 2$).

Les Fig. 9 et 10 sont respectivement relatives au premier canal d'énergie (20-49 keV) et au second canal d'énergie.

On a respectivement désigné par 910 et 1010 les courbes de coefficient d'atténuation avant correction, par 920 et 1020, les courbes de coefficient d'atténuation après une itération, et par 930, 1040 les courbes de coefficient d'atténuation après 20 itérations.

On a également représenté par les courbes en traits discontinus 950 et 1050 les mesures théoriques (spectromètre idéal).

On remarque qu'après 20 itérations le coefficient d'atténuation linéaire équivalent est quasi-constant et confondu avec la valeur théorique.

**Revendications**

1. Méthode de mesure d'atténuation linéaire équivalente subie par un rayonnement traversant un objet au moyen d'un spectromètre à conversion directe, comprenant une source de rayonnement et un détecteur, ladite méthode comprenant

la détection, par le détecteur, du rayonnement après qu'il a traversé ledit objet, une mesure d'atténuation étant représentée par un vecteur $\mathbf{M}^d$ donnant l'atténuation du rayonnement dans une pluralité $N_k$ de canaux d'énergie du détecteur, l'atténuation réelle du matériau constitutif de l'objet se décomposant selon une base caractéristique de l'atténuation dans ce matériau, $\boldsymbol{\mu}_n$, $n = 1,..., N$ avec $N \geq 2$ ;

ledit spectromètre étant **caractérisé par** une matrice de réponse $\Psi$ donnant pour une pluralité $N_k$ de bandes d'énergie la probabilité qu'un photon émis dans une bande d'énergie $h = 1,...,N_h$ soit détecté dans un canal d'énergie,

ladite méthode étant **caractérisée en ce qu'**elle estime un vecteur $\mathbf{M}^{lin}$, dit vecteur d'atténuation linéaire équivalente, donnant pour chaque canal d'énergie une atténuation linéairement dépendante de l'épaisseur de matériau traversée par le rayonnement, ladite méthode comprenant une étape d'initialisation (510, 610) dans laquelle on estime $\mathbf{M}^{lin}$ par la mesure d'atténuation $\mathbf{M}^d$ et une succession d'itérations, chaque itération $j$ fournissant une estimation $\hat{\mathbf{M}}^{lin}(j)$ et comprenant :

(a) une étape de projection (520,620) de l'estimation $\hat{\mathbf{M}}^{lin}(j\text{-}1)$ de $\mathbf{M}^{lin}$ obtenue à l'itération précédente sur une base image $\Psi\boldsymbol{\mu_n}$, $n=1,...,N$, image par ladite matrice de réponse $\Psi$ de ladite base caractéristique de l'atténuation du matériau ;

(b) une étape de détermination d'une déformation non linéaire en énergie, $T$, (530, 631-633) des composantes de l'estimation $\hat{\mathbf{M}}^{lin}(j\text{-}1)$ pour obtenir une atténuation correspondante $\mathbf{M}_r^d(j)$ dans lesdits différents canaux d'énergie, conforme à un modèle non linéaire du spectromètre ;

(c) une étape de déformation inverse (540, 640) des composantes de $\mathbf{M}^d$ pour fournir une nouvelle estimation $\hat{\mathbf{M}}^{lin}(j)$ de l'atténuation linéaire équivalente $\mathbf{M}^{lin}$ de ladite mesure d'atténuation, ou des composantes $\hat{c}_1...,\hat{c}_N$ de ladite atténuation linéaire équivalente $\mathbf{M}^{lin}$ dans ladite base image,

l'estimation $\mathbf{M}^{lin}(j)$ de l'atténuation linéaire équivalente ou de ses composantes dans ladite base image étant fournie comme ladite mesure d'atténuation linéaire équivalente.

2. Méthode de mesure d'atténuation linéaire équivalente selon la revendication 1, **caractérisée en ce que** les itérations sont arrêtées (550) lorsqu'un nombre prédéterminé ($j_{max}$) d'itérations est atteint.

3. Méthode de mesure d'atténuation linéaire équivalente selon la revendication 1, **caractérisée en ce que** les itérations sont arrêtées (550) lorsqu'un critère de convergence de l'estimation de l'atténuation linéaire équivalente est satisfait.

4. Méthode de mesure d'atténuation linéaire équivalente selon l'une des revendications précédentes, **caractérisée en ce que** la base caractéristique du matériau est une base de vecteurs $\boldsymbol{\mu_{Co}}$, $\boldsymbol{\mu_{Ph}}$ où $\boldsymbol{\mu_{Co}}$ donne le coefficient d'atténuation linéique du rayonnement dû à l'effet Compton dans les différentes bandes d'énergie et $\boldsymbol{\mu_{Ph}}$ donne le coefficient d'atténuation du rayonnement dû à l'effet photoélectrique dans les différentes bandes d'énergie, le vecteur des coefficients d'atténuation réelle $\mu^j$ du matériau dans ces différentes bandes étant obtenu comme combinaison linéaire des vecteurs $\boldsymbol{\mu_{Co}}$, $\boldsymbol{\mu_{Ph}}$.

5. Méthode de mesure d'atténuation linéaire équivalente selon l'une des revendications 1 à 3, **caractérisée en ce que** la base caractéristique du matériau est une base de vecteurs $\boldsymbol{\mu_n}$, $n=1,..., N$, relatifs à des matériaux de référence, chaque vecteur de cette base donnant les coefficients d'atténuation réelle dans les différentes bandes d'énergie pour un matériau de référence.

6. Méthode de mesure d'atténuation linéaire équivalente selon l'une des revendications précédentes, **caractérisée en ce qu'**à l'étape (a) d'une itération $j$, on détermine un vecteur $\hat{\mathbf{c}}_j$ de taille $N$ donnant les composantes de $\hat{\mathbf{M}}^{lin}(j\text{-}1)$ dans la base image $\Psi\boldsymbol{\mu_n}$, $n=1,..., N$.

7. Méthode de mesure d'atténuation linéaire équivalente selon la revendication 6, **caractérisée en ce qu'**on détermine la transformation non-linéaire $T$ en estimant (631) l'atténuation réelle dans le matériau à partir de $\hat{\mathbf{M}}_i(j) = \mathbf{B}_\mu\hat{\mathbf{c}}_j$, où $\mathbf{B}_\mu$ est une matrice dont les colonnes sont constituées par les vecteurs $\boldsymbol{\mu_n}$, $n=1,..., N$, et en calculant (633) la matrice diagonale $\mathbf{W}_j^d$ telle que $\mathbf{W}_j^d\hat{\mathbf{M}}^{lin}(j-1) = \mathbf{M}_r^d(j)$ où $\mathbf{M}_r^d(j) = -\ln\left(\Psi e^{-\mathbf{B}_\mu\hat{\mathbf{c}}_j}\right)$.

8. Méthode de mesure d'atténuation linéaire équivalente selon la revendication 7, **caractérisée en ce qu'**à l'étape (c) de l'itération $j$ on obtient (540, 640) la nouvelle estimation $\hat{\mathbf{M}}^{lin}(j)$ de l'atténuation linéaire équivalente au moyen de

$$\hat{\mathbf{M}}^{lin}(j) = \left(\mathbf{W}_j^d\right)^{-1}\mathbf{M}^d.$$

9. Méthode de mesure d'atténuation linéaire équivalente selon l'une des revendications précédentes, **caractérisée en ce qu'**elle fournit en outre une caractérisation du matériau à partir des composantes $\hat{c}_1,...,\hat{c}_N$ de ladite atténuation linéaire équivalente $\mathbf{M}^{lin}$ dans ladite base image.

10. Méthode de mesure d'atténuation linéaire équivalente selon les revendications 5 ou 9, **caractérisée en ce que** ladite caractérisation est une composition du matériau en lesdits matériaux de référence.

**Patentansprüche**

1. Verfahren zur Messung der linearen äquivalenten Abschwächung, die eine Strahlung erfährt, welche ein Objekt durchquert, mit Hilfe eines Spektrometers zur direkten Konversion, umfassend eine Strahlungsquelle und einen Detektor, wobei das Verfahren Folgendes umfasst:

die Detektion, mittels des Detektors, der Strahlung, nachdem sie das Objekt durchquert hat, wobei eine Messung der Abschwächung durch einen Vektor $\mathbf{M}^d$ repräsentiert wird, der die Abschwächung der Strahlung in einer Mehrzahl $N_k$ von Energiekanälen des Detektors angibt, wobei die reelle Abschwächung des Materials, aus dem das Objekt gebildet ist, entlang einer Basis zerlegt wird, die charakteristisch ist für die Abschwächung in diesem Material, $\mu_n$, $n = 1,..., N$ mit $N \geq 2$;
wobei das Spektrometer durch eine Antwortmatrix $\Psi$ gekennzeichnet ist, die für eine Mehrzahl $N_k$ von Energiebändern die Wahrscheinlichkeit angibt, dass ein Photon, das in einem Energieband $h = 1,..., N_h$ emittiert wird, in einem Energiekanal detektiert wird,
wobei das Verfahren **dadurch gekennzeichnet ist, dass** es einen Vektor $\mathbf{M}^{lin}$ abschätzt, genannt Vektor der linearen äquivalenten Abschwächung, der für jeden Energiekanal eine Abschwächung angibt, die linear von der Dicke des Materials abhängt, das durch die Strahlung durchquert wird, wobei das Verfahren einen Initialisierungsschritt (510, 610) umfasst, in dem man $\mathbf{M}^{lin}$ durch die Messung der Abschwächung $\mathbf{M}^d$ und eine Abfolge von Iterationen abschätzt, wobei jede Iteration $j$ eine Abschätzung $\hat{\mathbf{M}}^{lin}(j)$ liefert und umfasst:

(a) einen Schritt der Projektion (520, 620) der Abschätzung $\hat{\mathbf{M}}^{lin}(j-1)$ von $\mathbf{M}^{lin}$, erhalten bei der vorhergehenden Iteration, auf eine Bildbasis $\Psi \mu_n$, $n = 1,..., N$ als Bild durch die Antwortmatrix $\Psi$ der Basis, die für die Abschwächung des Materials charakteristisch ist;
(b) einen Schritt der Bestimmung einer nichtlinearen Energiedeformation, $T$, (530, 631-633) der Komponenten der Abschätzung $\hat{\mathbf{M}}^{lin}(j-1)$, um eine entsprechende Abschwächung $\mathbf{M}_r^d\ (j)$ in den verschiedenen Energiekanälen gemäß einem nichtlinearen Modell des Spektrometers zu erhalten:
(c) einen Schritt der inversen Deformation (540, 640) der Komponenten von $\mathbf{M}^d$, um eine neue Abschätzung $\hat{\mathbf{M}}^{lin}(j)$ der linearen äquivalenten Abschwächung $\mathbf{M}^{lin}$ der Abschwächungsmessung zu liefern, oder der Komponenten $\hat{c}_1, ...\hat{c}_N$ der linearen äquivalenten Abschwächung $\mathbf{M}^{lin}$ in der Bildbasis,

wobei die Abschätzung $\hat{\mathbf{M}}^{lin}(j)$ der linearen äquivalenten Abschwächung oder ihrer Komponenten in der Bildbasis als die Messung der linearen äquivalenten Abschwächung geliefert wird.

2. Verfahren zur Messung der linearen äquivalenten Abschwächung nach Anspruch 1, **dadurch gekennzeichnet, dass** die Iterationen angehalten werden (550), wenn eine vorbestimmte Zahl ($j_{max}$) von Iterationen erreicht ist.

3. Verfahren zur Messung der linearen äquivalenten Abschwächung nach Anspruch 1, **dadurch gekennzeichnet, dass** die Iterationen angehalten werden (550), wenn ein Konvergenzkriterium der Abschätzung der linearen äquivalenten Abschwächung erfüllt ist.

4. Verfahren zur Messung der linearen äquivalenten Abschwächung nach einem der vorhergehenden Ansprüche, **dadurch gekennzeichnet, dass** die für das Material charakteristische Basis eine Basis von Vektoren $\mu_{Co}$, $\mu_{Ph}$ ist, wobei $\mu_{Co}$ den linearen Abschwächungskoeffizienten der Strahlung aufgrund des Compton-Effekts in den verschiedenen Energiebändern angibt, und $\mu_{Ph}$ den Abschwächungskoeffizienten der Strahlung aufgrund des photoelektrischen Effekts in den verschiedenen Energiebändern angibt, wobei der Vektor der Koeffizienten der reellen Abschwächung $\mu^i$ des Materials in diesen verschiedenen Bändern als Linearkombination der Vektoren $\mu_{Co}$, $\mu_{Ph}$ erhalten wird.

5. Verfahren zur Messung der linearen äquivalenten Abschwächung nach einem der Ansprüche 1 bis 3, **dadurch gekennzeichnet, dass** die charakteristische Basis des Materials eine Basis von Vektoren $\mu_n$, $n = 1,..., N$ mit Bezug zu Referenzmaterialien ist, wobei jeder Vektor dieser Basis die Koeffizienten der reellen Abschwächung in den verschiedenen Energiebändern für ein Referenzmaterial angibt.

6. Verfahren zur Messung der linearen äquivalenten Abschwächung nach einem der vorhergehenden Ansprüche, **dadurch gekennzeichnet, dass** man im Schritt (a) einer Iteration $j$ einen Vektor $\hat{c}_j$ der Größe $N$ bestimmt, der die

Komponenten von $\hat{\mathbf{M}}^{lin}(j-1)$ in der Bildbasis $\Psi\,\mu_n$, $n = 1,...,\,N$ angibt.

**7.** Verfahren zur Messung der linearen äquivalenten Abschwächung nach Anspruch 6, **dadurch gekennzeichnet, dass** man die nichtlineare Transformation **T** bestimmt durch Abschätzen (631) der reellen Abschwächung in dem Material ausgehend von $\hat{\mathbf{M}}_i(j) = \mathbf{B}_\mu \hat{\mathbf{c}}_j$, wobei $\mathbf{B}_\mu$ eine Matrix ist, deren Spalten durch die Vektoren $\mu_n$, $n = 1,...,\,N$ gebildet sind, und durch Berechnen (633) der Diagonalmatrix $\mathbf{W}_j^d$ derart, dass

$$\mathbf{W}_j^d\,\widehat{\mathbf{M}}^{lin}(j-1) \;=\; \mathbf{M}_r^d\;(j),\quad \text{wobei}\quad \mathbf{M}_r^d\;(j) \;=\; -\ln\,{}_{(\Psi\,\mathbf{e}^{\text{-}\mathbf{B}_\mu\hat{\mathbf{c}}_j)}.}$$

**8.** Verfahren zur Messung der linearen äquivalenten Abschwächung nach Anspruch 7, **dadurch gekennzeichnet, dass** man im Schritt (c) der Iteration j die neue Abschätzung $\hat{\mathbf{M}}^{lin}(j)$ der linearen äquivalenten Abschätzung erhält (540, 640) mit Hilfe von

$$\widehat{\mathbf{M}}^{lin}(j) = (\mathbf{W}_j^d)^{-1}\mathbf{M}^d.$$

**9.** Verfahren zur Messung der linearen äquivalenten Abschwächung nach einem der vorhergehenden Ansprüche, **dadurch gekennzeichnet, dass** es ferner eine Charakterisierung des Materials liefert ausgehend von den Komponenten $\hat{c}_1, ...\hat{c}_N$ der linearen äquivalenten Abschwächung $\mathbf{M}^{lin}$ in der Bildbasis.

**10.** Verfahren zur Messung der linearen äquivalenten Abschwächung nach den Ansprüchen 5 oder 9, **dadurch gekennzeichnet, dass** die Charakterisierung eine Zusammensetzung des Materials aus den Referenzmaterialien ist.

## Claims

**1.** A method for linearizing attenuation measurements obtained by means of a direct conversion spectrometer comprising a radiation source and a detector for detecting said radiation after it has passed through an object, an attenuation measurement being represented by a vector $\mathbf{M}^d$ giving the attenuation of the radiation in a plurality $N_k$ of energy channels of the detector, the actual attenuation of the material constituting the object being resolved according to a characteristic base of the attenuation in this material, $\mu_n$, $n = 1,...,N$ with $N \geq 2$;

said spectrometer being **characterized by** a response matrix $\psi$ giving, for a plurality $N_k$ of energy channels of the detector, the probability that a photon emitted in an energy bin $h = 1,...,N_h$ is detected in an energy channel,

said method being **characterized in that** it estimates a vector $\mathbf{M}^{lin}$, called an equivalent linear attenuation vector, giving for each energy channel an attenuation linearly depending on the thickness of material through which the radiation passes, said method comprising an initialization step (510, 610) wherein $\mathbf{M}^{lin}$ is estimated by the attenuation measurement $\mathbf{M}^d$ and a succession of iterations, each iteration $j$ providing an estimate $\hat{\mathbf{M}}^{lin}(j)$ and comprising:

(a) a step (520, 620) of projecting the estimate $\hat{\mathbf{M}}^{lin}(j\text{-}1)$ of $\mathbf{M}^{lin}$ obtained at the previous iteration onto an image base $\psi\mu_n$, $n = 1,...,N$, image by said response matrix $\Psi$ of said characteristic base of the attenuation of the material;

(b) a step of determining an energy non linear deformation, $T$, (530, 631-633) of the components of the estimate $\hat{\mathbf{M}}^{lin}(j\text{-}1)$ for obtaining a corresponding attenuation $\mathbf{M}_r^d(j)$ in said different energy channels, in accordance with a non linear model of the spectrometer;

(c) a step (540, 640) of reverse deformation of the components of $\mathbf{M}^d$ to provide a new estimate $\hat{\mathbf{M}}^{lin}(j)$ of the equivalent linear attenuation $\mathbf{M}^{lin}$ of said attenuation measurement, or of the components $\hat{c}_1,...,\hat{c}_N$ of said equivalent linear attenuation $\mathbf{M}^{lin}$ in said image base.

**2.** The method for linearizing attenuation measurements according to claim 1, **characterized in that** the iterations are stopped (550) when a predetermined number ($j_{max}$) of iterations is reached.

**3.** The method for linearizing attenuation measurements according to claim 1, **characterized in that** the iterations are stopped (550) when a convergence criterion of the estimate of the equivalent linear attenuation is met.

**4.** The method for linearizing attenuation measurements according to one of the preceding claims, **characterized in**

**that** the characteristic base of the material is a base of vectors $\mu_{Co}$, $\mu_{Ph}$ where $\mu_{Co}$ gives the linear attenuation coefficient of the radiation due to the Compton effect in the different energy bins and $\mu_{Ph}$ gives the attenuation coefficient of the radiation due to the photoelectric effect in the different energy bins, the vector of the actual attenuation coefficients $\mu^j$ of the material in these different bins being obtained as a linear combination of the vectors $\mu_{Co}$, $\mu_{Ph}$.

5. The method for linearizing attenuation measurements according to one of claims 1 to 3, **characterized in that** the characteristic base of the material is a base of vectors $\mu_n$, $n = 1,..., N$, relating to reference materials, each vector of this base giving the actual attenuation coefficients in the different energy bins for a reference material.

6. The method for linearizing attenuation measurements according to one of the preceding claims, **characterized in that** in step (a) of an iteration $j$, a vector $\hat{\mathbf{c}}_j$ of size $N$ is determined giving the components of $\hat{\mathbf{M}}^{lin}(j-1)$ in the image base $\psi\mu_n$, $n=1,..., N$.

7. The method for linearizing attenuation measurements according to claim 6, **characterized in that** the non-linear transformation $T$ is determined by estimating (631) the actual attenuation in the material from $\hat{\mathbf{M}}_i(j) = \mathbf{B}_\mu\hat{\mathbf{c}}_j$, where $\mathbf{B}_\mu$ is a matrix the columns of which consist of the vectors $\mu_n$, $n=1,...,N$, and by calculating (633) the diagonal matrix

$$\mathbf{W}_j^d \quad \text{such that} \quad \mathbf{W}_j^d\hat{\mathbf{M}}^{lin}(j-1) = \mathbf{M}_r^d(j) \quad \text{where} \quad \mathbf{M}_r^d(j) = -\ln\left(\Psi e^{-\mathbf{B}_\mu\hat{\mathbf{c}}_j}\right).$$

8. The method for linearizing attenuation measurements according to claim 7, **characterized in that** in step (c) of the iteration $j$, the new estimate $\hat{\mathbf{M}}^{lin}(j)$ of the equivalent linear attenuation is obtained (540, 640) by means of

$$\hat{\mathbf{M}}^{lin}(j) = \left(\mathbf{W}_j^d\right)^{-1}\mathbf{M}^d.$$

9. The method for linearizing attenuation measurements according to one of the preceding claims, **characterized in that** it further provides a characterization of the material from the components $\hat{c}_1,...,\hat{c}_N$ of said equivalent linear attenuation $\mathbf{M}^{lin}$ in said image base.

10. The method for linearizing attenuation measurements according to claims 5 and 9, **characterized in that** said characterization is a composition of the material in said reference materials.

Fig. 1

Fig. 2

Fig. 3

EP 2 930 540 B1

Fig. 4

$$\hat{\mathbf{M}}^{lin}(0) = \mathbf{M}^d$$
$$j = 1$$

510

Ψ

$\mathbf{B}_\mu$

$\mathbf{M}^d$

projection de $\hat{\mathbf{M}}^{lin}(j-1)$ sur la base $\mathbf{\Psi}\mathbf{B}_\mu$
détermination de $\hat{\mathbf{c}}_j$

520

reconstruction de l'atténuation $\hat{\mathbf{M}}_c(j) = \mathbf{B}_\mu\hat{\mathbf{c}}_j$
calcul de la déformation $\mathbf{W}_j^d$

530

estimation de l'atténuation linéaire
équivalente $\hat{\mathbf{M}}^{lin}(j) = \left(\mathbf{W}_j^d\right)^{-1}\mathbf{M}_d$

540

555

$j = j+1$

N

critère d'arrêt
satisfait?

550

Y

atténuation linéaire équivalente $\hat{\mathbf{M}}^{lin}$
[composantes $\hat{c}_1,...,\hat{c}_N$]

560

<u>Fig. 5</u>

310

320

631

$$\hat{\mathbf{c}}_j$$

$$\mathbf{B}_\mu$$

$$\mathbf{M}^{lin} = \mathbf{\Psi} \mathbf{B}_\mu \mathbf{c}$$

620

$$\hat{\mathbf{M}}^{lin}(j)$$

$$\mu^i = \sum_{n=1}^{N} a_n \mu_n$$

$$\mathbf{\Psi}$$

$$\mathbf{M}^{lin} = \sum_{n=1}^{N} c_n \mathbf{\Psi} \mu_n$$

$$\hat{\mathbf{M}}^{lin}(0) = \mathbf{M}^d$$

633

$$\hat{\mathbf{M}}_c(j)$$

$T$

$$\mathbf{W}^d(j)$$

640

610

632

$$\left(\mathbf{W}^d(j)\right)^{-1}$$

$$\mathbf{M}^d(L) = -\ln\left(\mathbf{\Psi} e^{-\mathbf{B}_\mu \mathbf{c}}\right)$$

$$\mathbf{M}_r^d(j)$$

$$\mathbf{M}^d = \sum_{n=1}^{N} c_n \mathbf{W}^d \mathbf{\Psi} \mu_n$$

$$\mathbf{M}^d$$

330

Fig. 6

**Fig. 7**

**Fig. 8**

Bin: k=1 (of 2), [20-49 keV]

Fig. 9

Bin: k=2 (of 2), [50-150 keV]

Fig. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A POTOP.** *Investigation of the polynomial approach for material décomposition in spectral X-ray tomography using an energy-resolved detector*

- **L. MARTIN.** *Enhanced information extraction in multi-energy X-ray tomography for security,* 2014